# EUROPÄISCHE PATENTSCHRIFT

(11) **EP 0 394 717 B1**
(45) Veröffentlichungstag und Bekanntmachung des Hinweises auf die Patenterteilung: **21.07.1993**
(21) Anmeldenummer: 90106448.5
(22) Anmeldetag: 04.04.1990
(51) Int. Cl.: F16C 29/06

(54) **Rollenumlaufschuh für eine Linearführung**
Recirculating shoe for a linear guide
Patin à recirculation pour guidage linéaire

(30) Priorität: 22.04.1989 DE 3913297
(43) Veröffentlichungstag der Anmeldung: 31.10.1990
(73) Patentinhaber: Jacob, Werner, D-60598 Frankfurt (DE)
(72) Erfinder: Jacob, Werner, D-60598 Frankfurt (DE)
(74) Vertreter: Harwardt, Günther, Dipl.-Ing.

(56) Entgegenhaltungen:
- CH-A- 611 393
- FR-A- 2 271 442
- FR-A- 2 514 290
- GB-A- 2 194 003
- US-A- 3 246 933
- US-A- 4 576 422

## Beschreibung

Die Erfindung betrifft einen Rollenumlaufschuh für eine Linearführung mit einem Grundkörper, der eine Traglaufbahn besitzt, an der Rollen, die aus dem Grundkörper vortreten, zur Lastübertragung auf eine Lauffläche einer Laufschiene abgestützt sind, mit an beiden Enden des Grundkörpers angebrachten Umlenkabschnitten, die durch Innenumlenkstücke und Käfigteile gebildet sind und die mit einer Rücklaufbahn für die Rollen zur Führung in einer endlosen Reihe verbunden sind, mit Führungsmitteln, die in Vertiefungen der Stirnflächen der Rollen teilweise eingesetzte, um die Rollenachse rotationssymmetrische Führungselemente umfassen, mit Führungsnuten, die Bestandteil des Grundkörpers sind, an deren Borden die Rollen mit ihren Stirnflächen seitlich geführt sind, und mit Führungen die sich seitlich der Führungsnuten entlang der Traglaufbahn, der Rücklaufbahn und die sich auch entlang der Umlenkabschnitte erstrecken, und wobei die Rollen gegen Herausfallen durch die Führungselemente einerseits und durch die Führungen andererseits geführt sind.

Ein solcher Rollenumlaufschuh ist in der FR-A-2 271 442 beschrieben. Für die Rollen ist nur eine Ungefährführung vorgesehen, weil eine Winkelverstellung von Rollen und Grundkörper zugelassen werden muß, um die beabsichtigte Einstellung zu erreichen.

In der DE-A-24 21 328 ist ein Rollenumlaufschuh beschrieben, bei dem die Rollen ausschließlich durch die als Kugeln ausgebildeten Führungselemente geführt werden. Bei einer solchen Führung besteht die Gefahr, daß sich die Rollen schräg stellen. Um dies zu verhindern, ist in weiterer Ausgestaltung vorgeschlagen, eine Art Kette, wie in Fig. 11 gezeigt, zu bilden.

Ferner ist aus der DE-C-30 38 377 eine Ausführung bekannt, bei der die Rollen mit zusätzlichen zylindrischen Ansätzen versehen sind, deren Stirnflächen an dem Grundkörper zugeordneten Führungsleisten geführt sind. Bei dieser Ausführungsform müssen die Stirnflächen der Rollen genau bearbeitet werden müssen. Desgleichen müssen auch die Führungsleisten im Verhältnis zu den Rollen auf genauem Abstand zueinander gehalten werden, um eine Führung ohne Verklemmen erreichen zu können. Dies ist schwierig zu verwirklichen, da ein Nachgeben aufgrund der Halterung möglich ist. Darüberhinaus ist die an den Endflächen der Führungsansätze vorgesehene Führung ungünstig, weil das für die Führung maßgebende Verhältnis Durchmesser zu Länge ungünstig ist.

Der Erfindung liegt die Aufgabe zugrunde, die Führung für die Rollen zu vereinfachen, wobei gewährleistet sein soll, daß die Rollen in allen Bereichen der Traglaufbahn, der Umlenkabschnitte und der Rücklaufbahn ohne die Gefahr des Verklemmens geführt sind.

Diese Aufgabe wird erfindungsgemäß bei einer ersten Ausführungsform dadurch gelöst, daß die Rollen mit ihren Stirnflächen an den Borden der Führungsnuten anliegend geführt sind, daß die Innenumlenkstücke separate Bauteile darstellen, die kopfseitig an den Grundkörper anschließend angeordnet sind, daß ein in der Mittelebene zwischen Traglaufbahn und Rücklaufbahn geteilter Käfig vorgesehen ist, der aus zwei Führungskäfigteilen besteht und daß die Führungskäfigteile in der Mittelebene zentriert aneinander liegen, die Innenumlenkstücke zentriert halten und zusammen mit diesen die Umlenkabschnitte bilden.

Bei einer zweiten Ausführungsform ist erfindungsgemäß zur Lösung der Erfindungsaufgabe vorgesehen, daß die Rollen mit ihren Stirnflächen an den Borden der Führungsnuten anliegend geführt sind, daß die Innenumlenkstücke separate Bauteile darstellen, die kopfseitig an den Grundkörper anschließend angeordnet sind, daß ein in einer Ebene, die quer zu den Rollenachsen verläuft, geteilter Käfig vorgesehen ist, der aus zwei Führungskäfigteilen besteht und daß die Führungskäfigteile in der Teilungsebene zentriert aneinander liegen, die Innenumlenkstücke zentriert halten und zusammen mit diesen die Umlenkabschnitte bilden.

Von Vorteil bei diesen Ausführungen ist, daß die Führung gegen Schrägstellen und die Halterung gegen Herausfallen getrennten Mitteln zugeordnet sind. Die Führung gegen Herausfallen erfordert nicht die Genauigkeit, die die Führung für die Verhinderung des Klemmens gewährleisten muß. Die Führung der Rollen erfolgt durch die Borde, die unmittelbar am Grundkörper vorgesehen sind. Die Führung der Kugeln ist entweder dem Grundkörper teilweise oder aber ausschließlich davon getrennten Mitteln zugeordnet.

Ein weiterer Vorteil besteht darin, daß die Vertiefungen für die Aufnahme der Kugeln bei der Herstellung der Rollen in einem Arbeitsgang eingeformt werden können. Die Kugeln sitzen drehbar in den Vertiefungen der Rollen. Anstelle der Kugeln können auch anders geformte Elemente zur Führung, die zumindest um die Rollenachse rotationssymmetrisch ausgebildet sind, genutzt werden. Die Führungselemente dienen ausschließlich der Sicherung gegen Herausfallen, nicht jedoch der Ausrichtung der Rollen. Aus diesem Grunde ist es auch möglich, in den Umlenkabschnitten und dem Rückführabschnitt die Führung ausschließlich über die Führungskäfigteile vorzunehmen. In diesen Bereichen ist nicht die genaue Parallelführung nötig, wie sie für den Tragbahnabschnitt gefordert ist. Die Rollen laufen nämlich in diesen Abschnitten lastfrei um. Aus diesem Grunde kann auch ein geteilter Käfig genutzt werden, der aufgrund seiner einfachen Ausbildung durch Spritzgießen aus Kunststoff hergestellt sein kann. Darüber hinaus ergibt sich eine einfache Gestaltung des Grundkörpers. Die Führungsnuten können beispielsweise durch Räumen hergestellt werden.

Bei der ersten Alternative eines Führungskäfigs, der in der Mittelebene geteilt ist, ist in Ausgestaltung der Erfindung vorgeschlagen, daß die Führungen aus ersten Führungslaufbahnen, die sich am Grundkörper entlang der Führungsnuten und der Innenumlenkstücke erstrecken, und aus zweiten Führungslaufbahnen der beiden Führungskäfigteile, die die ersten ergänzen, bestehen, wobei das erste Führungskäfigteil der Traglaufbahn zugeordnet ist und die beiden ersten Teilabschnitte der ersten und zweiten Führungslaufbahnen sowie der Zentrierausnehmungen für die Innenumlenkstücke zur Bildung der Umlenkabschnitte umfaßt und das zweite Führungskäfigteil der Rücklaufbahn zugeordnet ist und die beiden zweiten Teilabschnitte der ersten und zweiten Führungslaufbahnen sowie der Zentrierausnehmungen zur Bildung der Umlenkabschnitte umfaßt.

Für die Ausgestaltung der zweiten Ausführung, bei der der Führungskäfig in der Querebene geteilt ist, ist vorgesehen, daß die beiden Führungskäfigteile die Führungslaufbahnen für die Kugeln entlang der Traglaufbahn und der Rücklaufbahn vollständig aufweisen und daß die Führungskäfigteile den Grundkörper stirnseitig umschließen.

Vorzugsweise sind die Vertiefungen als Kegelbohrungen ausgebildet.

Zur Führung und Halterung der Innenumlenkstücke ist des weiteren vorgesehen, daß die beiden Führungskäfigteile Zentrierausnehmungen für die Halterung der Innenumlenkstücke über an diesen vorstehend angebrachten Zentrieransätzen aufweisen.

In weiterer Ausgestaltung ist vorgeschlagen, daß das der Traglaufbahn zugeordnete Führungskäfigteil an den seitlich der Führungsnut befindlichen Flächen des Grundkörpers anliegt und dessen Stirnseiten teilweise umgreift.

Das der Rücklaufbahn zugeordnete Führungskäfigteil ist vorzugsweise in einer seitlich der Führungsnut angebrachten Nutstufe des Grundkörpers versenkt aufgenommen und umgreift teilweise dessen Stirnseiten.

Die beiden Führungskäfigteile sind im Bereich der Umlenkabschnitte, in welchen sie den Grundkörper überragen, nach einem ergänzenden Vorschlag miteinander verschraubt.

Bevorzugt ist vorgesehen, daß die Führungskäfigteile die Rollen im Bereich der Umlenkabschnitte und der Rücklaufbahn abdecken.

Nach einem weiteren ergänzenden Merkmal bilden zwei Grundkörper mit zueinander winklig angeordneten Traglaufbahnen eine Baueinheit. Hierdurch lassen sich verschiedene Ausführungsformen erreichen, bei denen Lastaufnahmen in unterschiedlichen Belastungsrichtungen möglich sind.

Zwei bevorzugte Ausführungsbeispiele der Erfindung sind in der Zeichnung schematisch dargestellt.

Es zeigt
- Figur 1: einen Schnitt A-A gemäß Figur 2 durch einen Rollenumlaufschuh einer ersten Ausführungsform,
- Figur 2: eine Draufsicht auf einen Rollenumlaufschuh gemäß Figur 1, teilweise entsprechend der Schnittführung C-C gemäß Figur 4 geschnitten,
- Figur 3: einen Schnitt B-B gemäß Figur 2,
- Figur 4: eine Seitenansicht zu Figur 2 im Schnitt,
- Figur 5: eine Führung mit mehreren Umlaufschuhen, bei der jeweils zwei Umlaufschuhe einem gemeinsamen Grundkörper zugeordnet sind, im Querschnitt und
- Figur 6: einen Schnitt D-D gemäß Figur 5.

Bei beiden in der Zeichnung dargestellten Rollenumlaufschuhen 1,1a sind diese entlang einer Laufschiene 2 bewegbar. Die Laufschienen 2 besitzen Laufflächen 3. Der Rollenumlaufschuh 1,1a ist entlang der Laufflächen 3 bewegbar. Die Laufschiene 2 ist einem Maschinenteil, beispielsweise dem ruhenden Maschinenbett 5, und der Rollenumlaufschuh 1,1a einem anderen Maschinenteil, nämlich dem beweglichen Maschinenteil 4, zugeordnet.

Die Rollenumlaufschuhe 1,1a sind jeweils aus einem Grundkörper 6, in denen Führungsnuten 7,8 für Rollen 9 angebracht sind, sowie aus Führungskäfigteilen 12,13 und Innenumlenkstücken 17 gebildet.

Die Führungsnuten 7 bilden die Traglaufbahn 14. Im Bereich der Längserstreckung der Traglaufbahn 14 ragen die Rollen 9 aus dem Führungskäfigteil 12 heraus und liegen an der Lauffläche 3 der Laufschiene 2 an.

Die Rollen 9 stützen sich an der durch die Führungsnut 7 gebildeten Traglaufbahn 14 des Grundkörpers 6 ab. Es ist erkennbar, daß die Rollen 9 in der Führungsnut 7 seitlich an Borden 11 geführt sind. Hierzu liegen die Rollen 9 mit ihren beiden seitlichen Stirnflächen 10 an diesen Borden 11 an. Die Führung an den Borden 11 setzt sich auch in den Bereich der Umlenkabschnitte 16, die sich an die Stirnseiten 25 des Grundkörpers 6 anschließen, fort. Auch im Bereich der Rücklaufbahn 15, die als Führungsnut 8 in den Grundkörper 6 eingearbeitet ist und sich parallel zur Führungsnut 7 erstreckt, sind die Rollen 9 an den seitlichen Borden 11 mit ihren Stirnflächen 10 geführt. In dem Bereich der Umlenkabschnitte 16 und der Rücklaufbahn 15 sind die Rollen 9 lastfrei geführt.

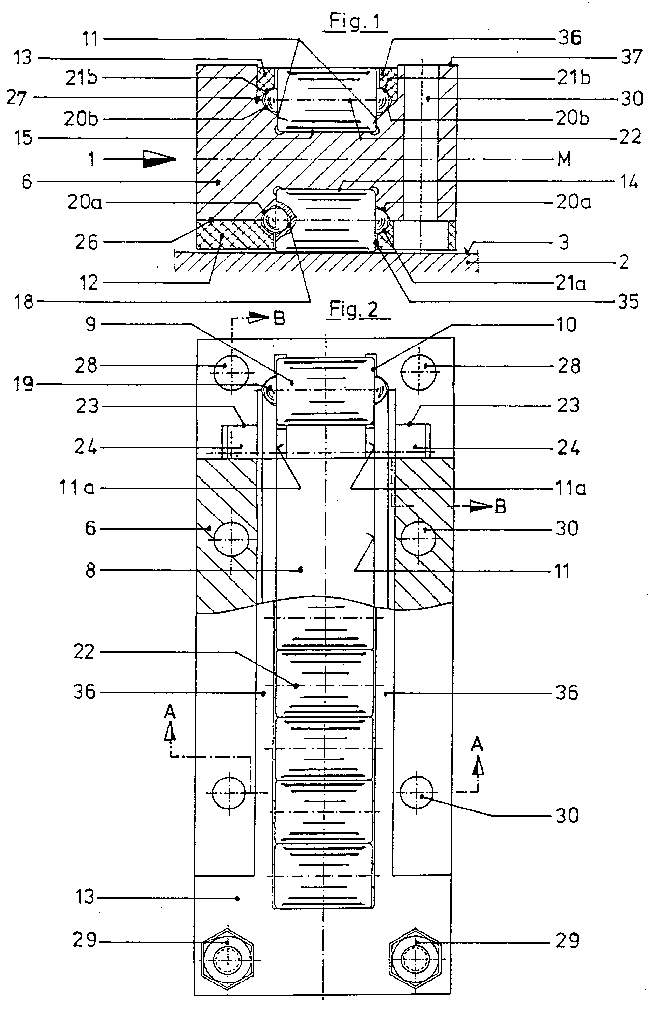

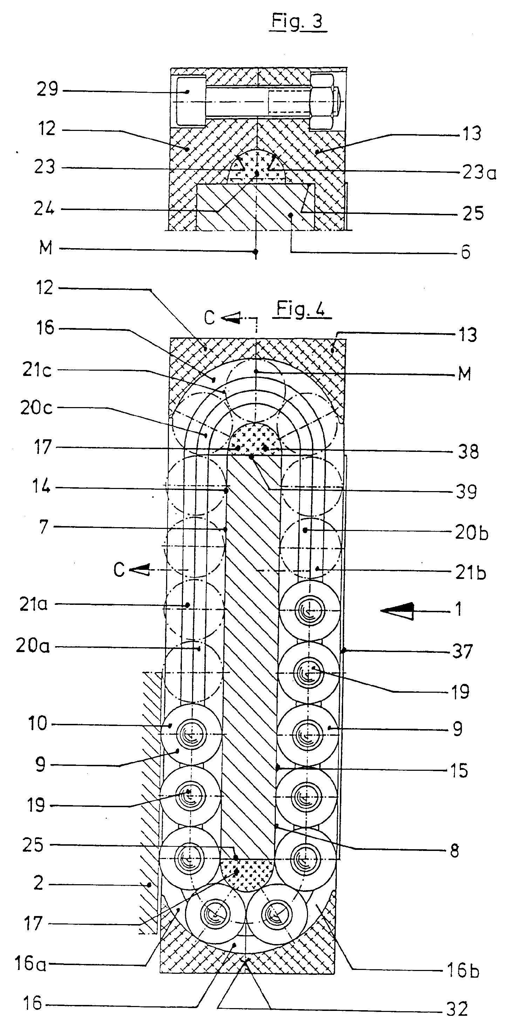

Wie aus den Figuren 1 bis 4 erkennbar, werden die Rollen 9 durch Kugeln 19 gegen Herausfallen aus den Führungsnuten 7, 8 gehalten. Hierzu besitzen die Rollen 9 in ihren Stirnflächen 10 Vertiefungen 18, welche als Kegelbohrungen ausgebildet sind. In diese ragen die Kugeln 19, die einen Durchmesser besitzen, der kleiner ist als der Durchmesser der Rollen 9, teilweise hinein. Der aus den Vertiefungen 18 über die Stirnflächen 10 vorstehende Teil der Kugeln 19 ist in Führungen 20, 21 gehalten. Bei der Ausführungsform nach den Figuren 1 bis 4 werden die Führungen 20, 21 zum einen Teil durch Führungslaufbahnen 20a, 20b, die dem Grundkörper 6 zugeordnet sind, und zum anderen Teil durch Führungslaufbahnen 21a, 21b, die den Führungskäfigteilen 12, 13 zugeordnet sind, gehalten. Im Bereich der Traglaufbahn 14 und der Rücklaufbahn 15 sind seitlich an die Führungsnuten 7, 8 anschließend die beiden ersten Führungslaufbahnen 20a und 20b angebracht. Diese Führungslaufbahnen 20a, 20b setzen sich in entsprechenden Führungslaufbahnen 20c fort. Diese sind den Innenumlenkstücken 17 zugeordnet und sind an den Stirnseiten 25 des Grundkörpers 6 anliegend gehalten. Der Führungskäfig wird aus zwei Führungskäfigteilen 12, 13 gebildet, von denen das Führungskäfigteil 12 der Traglaufbahn 14 zugeordnet ist. Insbesondere aus Figur 1 ist erkennbar, daß das Führungskäfigteil 12 an den seitlich an die Führungsnut 7 sich anschließenden Flächen 26 des Grundkörpers 6 anliegt. Er ist als eine Art Platte ausgebildet, die einen Durchbruch 35 besitzt, aus dem die Rollen 9 herausragen. In diesem Bereich liegen die Rollen 9 an der Lauffläche 3 der Laufschiene 2 an. Parallel zu dem Verlauf der Führungsnut 7 sind seitlich des Durchbruches 35 zu den ersten Führungslaufbahnen 20a ergänzende Führungslaufbahnen 21a vorgesehen. Beide schließen zusammen die Kugeln 19 ein und führen sie entlang der Traglaufbahn 14. Die zweite Führungslaufbahn 21 setzt sich in den Bereich des Umlenkabschnittes 16 fort. Das Führungskäfigteil 12, das der Traglaufbahn 14 zugeordnet ist, übergreift seitlich die Stirnseiten 25 des Grundkörpers 6 bis zur Mittelebene M, die zwischen den beiden Führungsnuten 7, 8 des Grundkörpers 6 hindurchverläuft sowie sich parallel zu diesen erstreckt. In diesem Bereich bildet der Führungskäfigteil 12 einen ersten Teilabschnitt 16a des Umlenkabschnittes 16, in den hinein sich die zweite Führungsbahn 21 fortsetzt. Aus Figur 4 ist erkennbar, daß der Teilabschnitt 16a des Umlenkabschnittes 16 als Kreisbogen verläuft. Im Bereich der Mittelebene M bildet das Führungskäfigteil 12 eine Trennfläche 32, an welcher das andere Führungskäfigteil 13, das der Rücklaufbahn 15 zugeordnet ist und jeweils einen weiteren Teilabschnitt 16b der Umlenkabschnitte 16 umfaßt, anliegt.

Das zweite Führungskäfigteil 13 umfaßt zwei Stege 36, die durch die beiden Teilabschnitte 16b der Umlenkabschnitte 16 miteinander verbunden sind. Die Führungsnut 8, die die Rücklaufbahn 15 bildet, besitzt seitlich der die Führungsborde 11 bildenden Seitenflächen Führungslaufbahnen 20b für die Kugeln 19. Diese werden durch die Führungslaufbahnen 21, die an den Stegen 36 ausgebildet sind, ergänzt. Die Stege 36 des Führungskäfigteils 13 sind ebenfalls, wie die Teilabschnitte 16b der Umlenkabschnitte 16, gegenüber der Anschlußfläche 37 des Grundkörpers 6 zurückversetzt. Die Stege 36 sind also versenkt angeordnet. Dazu besitzt der Grundkörper 6 seitlich der Führungsnut 8 eine Nutstufe 27, in der die Stege 36 des Führungskäfigteils 13 aufgenonmen sind. Im Bereich der Umlenkabschnitte 16 sind die beiden Führungskäfigteile 12,13 zur Halterung der Innenumlenkstücke 17 ausgebildet. Die Innenumlenkstücke 17 besitzen, wie insbesondere aus den Figuren 2 bis 4 ersichtlich, ein zentrales Kernstück 38. Das Kernstück 38 bildet eine zu den Führungsnuten 7, 8 ergänzende Nut, welche zur seitlichen Führung der Rollen 9 entsprechende Borde 11a aufweist. Darüberhinaus besitzt es die ergänzenden Führungslaufbahnen 20c. Ferner besitzen die Innenumlenkstücke 17 eine Planfläche 39, mit der sie an den Stirnseiten 25 des Grundkörpers 6 anliegen, sowie Zentrieransätze 24, mit denen sie in entsprechenden Zentrierausnehmungen 23, 23a der beiden Führungskäfigteile 12, 13 aufgenonmen sind. Im Bereich der Teilabschnitte 16a, 16b der Umlenkabschnitte 16 besitzen die beiden Führungskäfigteile 12, 13 Bohrungen 28, durch die Verbindungsschrauben 29 hindurchgeführt sind, die die beiden Führungskäfigteile 12, 13 zusammenhalten. Durch diese Ausbildung werden die Rollen 9 über die Kugeln 19 gleichzeitig gegen Herausfallen gesichert. Die beiden Führungskäfigteile 12, 13 sowie die Innenumlenkstücke 17 können als Kunststoffformteile hergestellt sein. Als Kunststoff kommt hierzu zum Beispiel Polyacetal in Frage. Der Grundkörper 6 ist jedoch aus Wälzlagerstahl hergestellt.

Ferner sind im Grundkörper 6 Anschlußbohrungen 30 vorgesehen, durch die Schrauben hindurchgesteckt werden können, die zum Anschluß an ein Maschinenteil, nämlich dem bewegbaren Maschinenteil 4, dienen.

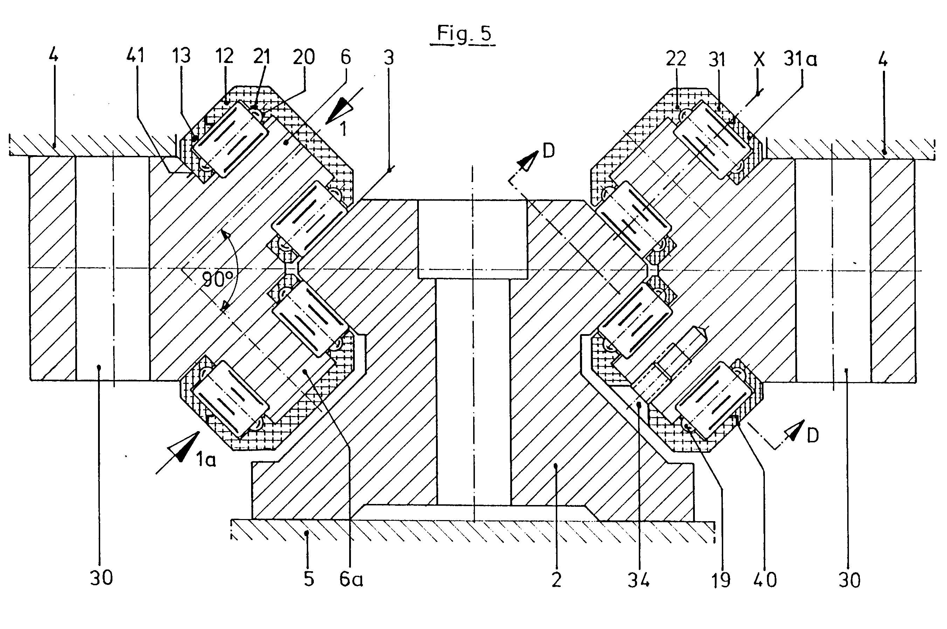

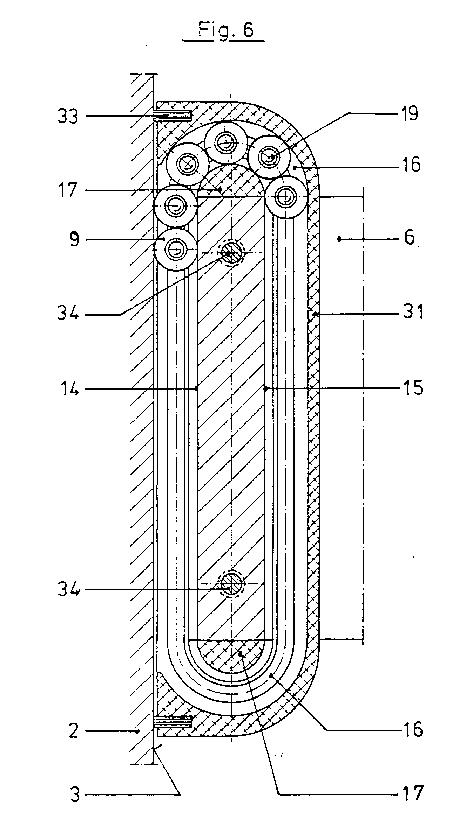

Bei der Ausführungsform nach den Figuren 5 und 6 sind jeweils zwei Grundkörper 6, 6a zu einer Baueinheit zusammengefaßt. Die Ausbildung der Führungsnuten 7, 8 entspricht der gemäß dem Ausführungsbeispiel nach den Figuren 1 bis 4. Die beiden Traglaufbahnen 14 der beiden Grundkörper 6, 6a sind unter einem Winkel angeordnet. Es ist erkennbar, daß dieser Winkel 90° beträgt. Es sind insgesamt vier Laufbahnen 3 dargestellt, wobei an jeweils zwei Laufbahnen zwei zu einer Baueinheit zusammengefaßte Rollenumlaufschuhe 1,1a geführt sind. Die Grundkörper 6 der Rollenumlaufschuhe 1,1a sind an dem bewegbaren Maschinenteil 4 befestigt, während die die Laufflächen 3 aufweisende Laufschiene 2 an dem Maschinenbett 5 festgelegt ist. Die beiden Führungskäfigteile 12, 13 sind in einer Ebene, die quer zur Rollenachse 22 verläuft und mit X (Fig. 5) bezeichnet ist, aneinanderanliegend ausgebildet. Hierzu kann beispielsweise eine V-förmige Zentrierung 40 vorgesehen sein. Das eine Führungskäfigteil 13 ist über den Grundkörper 6 geschoben und an einer Zentrierfläche 41 gehalten. Diese Zentrierfläche 41 erstreckt sich seitlich der Borde 11 der Führungsnuten 7, 8. Das andere Führungskäfigteil 12 übergreift den Grundkörper 6, 6a und ist ebenfalls auf der seitlich der Führungsnut 7, 8 angeordneten Führungsfläche 41 geführt. Darüberhinaus ist das Führungskäfigteil 12 über Schrauben 34 am Grundkörper 6, 6a befestigt. Die beiden Führungskäfigteile 12, 13 besitzen jeweils eine Führungslaufbahn 20, 21, die sich sowohl über die Traglaufbahn 14, die Rücklaufbahn 15, als auch die beiden Umlenkabschnitte 16 erstreckt. In diese Führungslaufbahnen 20, 21 greifen die Kugeln 19 zur Führung der Rollen 9 ein. Im Bereich der Umlenkabschnitte 16 sind die beiden Innenumlenkstücke 17 entsprechend der im Zusammenhang mit den Figuren 1 bis 4 beschriebenen Ausführungsform ausgebildet und gehalten. Aus Figur 6 ist erkennbar, daß die Rollen 9 im Bereich der Rücklaufbahn 15 und der Umlenkabschnitte 16 abgedeckt sind. Die Abdeckung ergibt sich durch die die Rollen überdeckenden Bereiche 31, 31a der beiden Führungskäfigteile 12, 13.
Ferner ist eine Dichtung 33 zur Abdichtung des Rollenumlaufschuhs gegenüber der Lauffläche 3 der Laufschiene 2 vorgesehen.

### Bezugszeichenliste

- 1,1a: Rollenumlaufschuh
- 2: Laufschiene
- 3: Lauffläche
- 4,5: Maschinenteil
- 6,6a: Grundkörper
- 7,8: Führungsnut
- 9: Rollen
- 10: Stirnfläche der Rollen
- 11,11a: Borde
- 12,13: Führungskäfigteile
- 14: Traglaufbahn
- 15: Rücklaufbahn
- 16: Umlenkabschnitt
- 16a,16: Teilabschnitte der Umlenkabschnitte
- 17: Innenumlenkstücke
- 18: Vertiefung in der Stirnfläche der Rollen
- 19: Kugeln
- 20,20a,:
- 20b,20c: erste Führungslaufbahn für Kugeln
- 21,21a,:
- 21b,21c: zweite Führungslaufbahn für die Kugeln
- 22: Rollenachse
- 23: Zentrierausnehmung im Führungskäfig
- 24: Zentrieransätze des Innenumlenkstückes
- 25: Stirnseite des Grundkörpers
- 26: Anlageflächen seitlich der Führungnuten für die Traglaufbahn
- 27: Nutstufe 28
- 28: Bohrung
- 29: Verbindungsschrauben
- 30: Anschlußbohrung
- 31: Abdeckung
- 32: Anlageflächen der Führungskäfige
- 33: Dichtung
- 34: Befestigungsschraube
- 35: Durchbruch
- 36: Stege
- 37: Anschlußfläche
- 38: Kernstück
- 39: Planfläche
- 40: Zentrierung
- 41: Zentrierfläche
- M: Mittelebene
- X: Teilebene

## Patentansprüche

1. Rollenumlaufschuh (1) für eine Linearführung mit einem Grundkörper (6), der eine Traglaufbahn (14) besitzt, an der Rollen (9), die aus dem Grundkörper (6) vortreten, zur Lastübertragung auf eine Lauffläche (3) einer Laufschiene (2) abgestützt sind, mit an beiden Enden des Grundkörpers (6) angebrachten Umlenkabschnitten (16,16a,16), die durch Innenumlenkstücke (17) und Käfigteile gebildet sind und die mit einer Rücklaufbahn (15) für die Rollen (9) zur Führung in einer endlosen Reihe verbunden sind, mit Führungsmitteln (19), die in Vertiefungen (18) der Stirnflächen (10) der Rollen (9) teilweise eingesetzte, um die Rollenachse rotationssymmetrische Führungselemente (19) umfassen, mit Führungsnuten (7,8), die Bestandteil des Grundkörpers (6) sind, an deren Borden (11,11a) die Rollen (9) mit ihren Stirnflächen (10) seitlich geführt sind, und mit Führungen (20,20a, 20b,20c;21,21a,21b,21c) die sich seitlich der Führungsnuten (7, 8) entlang der Traglaufbahn (14), der Rücklaufbahn (15) und die sich auch entlang der Umlenkabschnitte (16,16a,16) erstrecken, und wobei die Rollen (9) gegen Herausfallen durch die Führungselemente (19) einerseits und durch die Führungen (20,20a,20b,20c;21,21a,21b,21c) andererseits geführt sind,
dadurch gekennzeichnet,
daß die Rollen (9) mit ihren Stirnflächen (10) an den Borden (11,11a) der Führungsnuten (7,8) anliegend geführt sind, daß die Innenumlenkstücke (17) separate Bauteile darstellen, die kopfseitig an den Grundkörper (6) anschließend angeordnet sind, daß ein in der Mitteleben (M) zwischen Traglaufbahn (14) und Rücklaufbahn (15) geteilter Käfig vorgesehen ist, der aus zwei Führungskäfigteilen (12,13) besteht und daß die Führungskäfigteile (12,13) in der Mittelebene (M) zentriert aneinander liegen, die Innenumlenkstücke (17) zentriert halten und zusammen mit diesen die Umlenkabschnitte (16,16a,16) bilden.

2. Rollenumlaufschuh (1) für eine Linearführung mit einem Grundkörper (6), der eine Traglaufbahn (14) besitzt, an der Rollen (9), die aus dem Grundkörper (6) vortreten, zur Lastübertragung auf eine Lauffläche (3) einer Laufschiene (2) abgestützt sind, mit an beiden Enden des Grundkörpers (6,6a) angebrachten Umlenkabschnitten (16,16a,16), die durch Innenumlenkstücke (17) und Käfigteile gebildet sind und die mit einer Rücklaufbahn (15) für die Rollen (9) zur Führung in einer endlosen Reihe verbunden sind, mit Führungsmitteln (19), die in Vertiefungen (18) der Stirnflächen (10) der Rollen (9) teilweise eingesetzte, um die Rollenachse rotationssymmetrische Führungselemente (19) umfassen, mit Führungsnuten (7,8), die Bestandteil des Grundkörpers (6) sind, an deren Borden (11,11a) die Rollen (9) mit ihren Stirnflächen (10) seitlich geführt sind, und mit Führungen (20,20a, 20b,20c;21,21a,21b,21c) die sich seitlich der Führungsnuten (7, 8) entlang der Traglaufbahn (14), der Rücklaufbahn (15) und die sich auch entlang der Umlenkabschnitte (16,16a,16) erstrecken, und wobei die Rollen (9) gegen Herausfallen durch die Führungselemente (19) einerseits und durch die Führungen (20,20a,20b,20c;21,21a,21b,21c) andererseits geführt sind,
dadurch gekennzeichnet,
daß die Rollen (9) mit ihren Stirnflächen (10) an den Borden (11,11a) der Führungsnuten (7,8) anliegend geführt sind, daß die Innenumlenkstücke (17) separate Bauteile darstellen, die kopfseitig an den Grundkörper (6,6a) anschließend angeordnet sind, daß ein in einer Ebene (X), die quer zu den Rollenachsen (22) verläuft, geteilter Käfig vorgesehen ist, der aus zwei Führungskäfigteilen (12,13) besteht und daß die Führungskäfigteile (12,13) in der Teilungsebene (X) zentriert aneinander liegen, die Innenumlenkstücke (17) zentriert halten und zusammen mit diesen die Umlenkabschnitte (16,16a,16b) bilden.

3. Rollenumlaufschuh nach Anspruch 1,
dadurch gekennzeichnet,
daß die Führungen (20,21) aus ersten Führungslaufbahnen (20a,20b,20c), die sich am Grundkörper (6) entlang der Führungsnuten (7,8) und der Innenumlenkstücke (17) erstrecken, und aus zweiten Führungslaufbahnen (21) der beiden Führungskäfigteile (12,13), die die ersten ergänzen, bestehen, wobei das erste Führungskäfigteil (12) der Traglaufbahn (14) zugeordnet ist und die beiden ersten Teilabschnitte (16a) der ersten und zweiten Führungslaufbahnen (20c,21c) sowie der Zentierausnehmungen (23) für die Innenumlenkstücke (17) zur Bildung der Umlenkabschnitte (16) umfaßt und das zweite Führungskäfigteil (13) der Rücklaufbahn (15) zugeordnet ist und die beiden zweiten Teilabschnitte (16) der ersten und zweiten Führungslaufbahnen (20c,21c) sowie der Zentrierausnehmungen (23) zur Bildung der Umlenkabschnitte (16) umfaßt.

4. Rollenumlaufschuh nach Anspruch 2,
dadurch gekennzeichnet,
daß die beiden Führungskäfigteile (12,13) die Führungslaufbahnen (20,21) für die Kugeln (19) entlang der Traglaufbahn (14) und der Rücklaufbahn (15) vollständig aufweisen und daß die Führungskäfigteile (12,13) den Grundkörper (6,6a) stirnseitig umschließen.

5. Rollenumlaufschuh nach einem der Ansprüche 1 bis 4,
dadurch gekennzeichnet,
daß die Vertiefungen (18) als Kegelbohrung und die Führungselemente als Kugeln (19) ausgebildet sind.

6. Rollenumlaufschuh nach einem der Ansprüch 1 oder 3,
dadurch gekennzeichnet,
daß die beiden Führungskäfigteile (12, 13) Zentrierausnehmungen (23) für die Halterung der Innenumlenkstücke (17) über an diesen vorstehend angebrachten Zentrieransätzen (24) aufweisen.

7. Rollenumlaufschuh nach Anspruch 3,
dadurch gekennzeichnet,
daß der der Traglaufbahn (14) zugeordnete Führungskäfigteil (12) an den seitlich der Führungsnut (7) befindliche Flächen (26) des Grundkörpers (6) anliegt und dessen Strinseiten (25) teilweise umgreift.

8. Rollenumlaufschuh nach Anspruch 3,
dadurch gekennzeichnet,
daß der der Rücklaufbahn (15) zugeordnete Führungskäfigteil (13) in einer seitlich der Führungsnut (8) angebrachten Nutstufe (27) des Grundkörpers (6) versenkt aufgenommen ist und dessen Stirnseiten (25) teilweise umgreift.

9. Rollenumlaufschuh nach einem der Ansprüche 1 bis 4,
dadurch gekennzeichnet,
daß die beiden Führungskäfigteile (12, 13) im Bereich der Umlenkschnitte (16), in welchen sie den Grundkörper (6) überragen, mitteinander verschraubt sind.

10. Rollenumlaufschuh nach einem der Ansprüche 1 bis 4,
dadurch gekennzeichnet,
daß die Führungskäfigteile (12, 13) die Rollen (9) im Bereich der Umlenkabschnitte (16) und der Rücklaufbahn (15) abdecken.

11. Rollenumlaufschuh nach einem der Ansprüche 2 oder 4,
dadurch gekennzeichnet,
daß zwei Grundkörper (6, 6a) mit zueinander winklig angeordneten Traglaufbahnen (14) eine Baueinheit bilden (Figur 6).

## Claims

1. A roller circulation shoe (1) for linear guiding means, having a base (6) comprising a carrying track (14) which, for the purpose of transferring a load to a running face (3) of a running rail (2), supports rollers (9) emerging from the base (6); having deflecting portions (16, 16a, 16b) which are provided at both ends of the base (6), which are formed by inner deflecting pieces (17) and cage parts and which are connected to a return track (15) for the rollers (9) to provide guidance in an endless row; having guiding means (19) which comprise guiding elements (19) partially inserted into indentations (18) of the end faces (10) of the rollers (9) and designed to be rotationally symmetric around the roller axis; having guiding grooves (7, 8) forming part of the base (6) at whose rims (11, 11a) the rollers (9) are laterally guided via their end faces (10); and having guiding means (20, 20a, 20b, 20c; 21, 21a, 21b, 21c) which, on the sides of the guiding grooves (7, 8), extend along the carrying track (14), the return track (15) and also along the deflecting portions (16, 16a, 16b), with the rollers (9) being protected against falling out by being guided by the guiding elements (19) on the one hand and by the guiding means (20, 20a, 20b, 20c; 21, 21a, 21b, 21c) on the other hand,
characterised in
that the rollers (9) are guided in such a way that their end faces (10) rest against the rims (11, 11a) of the guiding grooves (7, 8), that the inner deflecting pieces (17) constitute separate components arranged so that their upper ends adjoin the base (6), that there is provided a cage which is divided in the centre plane (M) between the carrying track (14) and the return track (15) and which consists of two guiding cage parts (12, 13) and that the guiding cage parts (12, 13) abut one another in a centred way in the centre plane (M) , hold the inner deflecting pieces (17) in a centred way and, together therewith, form the deflecting portions (16, 16a, 16b).

2. A roller circulation shoe (1) for linear guiding means, having a base (6) comprising a carrying track (14) which, for the purpose of transferring a load to a running face (3) of a running rall (2), supports rollers (9) emerging from the base (6); having deflecting portions (16, 16a, 16b) which are provided at both ends of the base (6), which are formed by inner deflecting pieces (17) and cage parts and which are connected to a return track (15) for the rollers (9) to provide guidance in an endless row; having guiding means (19) which comprise guiding elements (19) partially inserted into indentations (18) of the end faces (10) of the rollers (9) and designed to be rotationally symmetric around the roller axis; having guiding grooves (7, 8) forming part of the base (6) at whose rims (11, 11a) the rollers (9) are laterally guided via their end faces (10); and having guiding means (20, 20a, 20b, 20c; 21, 21a, 21b, 21c) which, on the sides of the guiding grooves (7, 8), extend along the carrying track (14), the return track (15) and also along the deflecting portions (16, 16a, 16b), with the rollers (9) being protected against falling out by being guided by the guiding elements (19) on the one hand and by the guiding means (20, 20a, 20b, 20c; 21, 21a, 21b, 21c) on the other hand,
characterised in
that the rollers (9) are guided in such a way that their end faces (10) rest against the rims (11, 11a) of the guiding grooves (7, 8), that the inner deflecting pieces (17) constitute separate components arranged so that their upper ends adjoin the base (6, 6a), that there is provided a cage which is divided in a plane (X) extending transversely to the roller axes (22) and which consists of two guiding cage parts (12, 13) and that the guiding cage parts (12, 13) abut one another in a centred way in the dividing plane (X), hold the inner deflecting pieces (17) in a centred way and together therewith, form the deflecting portions (16, 16a, 16b).

3. A roller circulation shoe according to claim 1,
characterised in
that the guiding means (20, 21) consist of first guiding tracks (20a, 20b, 20c) extending at the base (6) along the guiding grooves (7, 8) and the inner deflecting pieces (17) and of second guiding tracks (21) of the two guiding cage parts (12, 13) complementing the first, the first guiding cage part (12) being associated with the carrying track (14) and comprising the two first partial portions (16a) of the first and second guiding tracks (20c, 21c) and the centring recesses (23) for the inner deflecting pieces (17) for forming the deflecting portions (16), and the second guiding cage part (13) being associated with the return track (15) and comprising the two second partial portions (16b) of the first and second guiding tracks (20c, 21c) and the centring recesses (23) for forming the reflecting portions (16).

4. A roller circulation shoe according to claim 2,
characterised in
that the two guiding cage parts (12, 13) fully comprise the guiding tracks (20, 21) for the balls (19) along the carrying track (14) and the return track (15) and that the guiding cage parts (12, 13) embrace the base (6, 6a) at the end faces.

5. A roller circulation shoe according to any one of claims 1 to 4,
characterised in
that the indentations (18) are designed as conical bores and the guiding elements as balls (19).

6. A roller circulation shoe according to any one of claims 1 or 3,
characterised in
that the two guiding cage parts (12, 13) comprise centring recesses (23) for holding the inner deflecting pieces (17) above centring projections (24) attached thereto so as to project.

7. A roller circulation shoe according to claim 3,
characterised in
that the guiding cage part (12) associated with the carrying track (14) rests against the faces (26) of the base (6) which are positioned at the side of the guiding groove (7) and partially embraces its ends faces (25).

8. A roller circulation shoe according to claim 3,
characterised in
that the guiding cage part (13) associated with the return track (15) is received in, so as to be countersunk in, a groove step (27) of the base (6) provided at the side of the guiding groove (8) and partially embraces its end faces (25).

9. A roller circulation shoe according to any one of claims 1 to 4,
characterised in
that the two guiding cage parts (12, 13), in the region of the deflecting portions (16) where they project beyond the base (6), are bolted to one another.

10. A roller circulation shoe according to any one of claims 1 to 4,
characterised in
that in the region of the deflecting portions (16) and the return track (14), the guiding cage parts (12, 13) cover the rollers (9).

11. A roller circulation shoe according to any one of claims 2 or 4,
characterised in
that two bases (6, 6a) with carrying tracks (14) arranged at an angle relative to one another form one unit (Fig. 6).

## Revendications

1. Patin à circulation de rouleaux (1) pour guidage linéaire, comportant : un corps de base (6) possédant une piste de roulement porteuse (14) contre laquelle des rouleaux (9) provenant du corps de base (6) prennent appui pour transmettre la charge sur une surface de roulement (3) d'un rail de roulement (2); des parties de renvoi (16, 16a, 16b) agencées aux deux extrémités du corps de base (6) et formées par des pièces intérieures de renvoi (17) et par des parties de cage et assemblées à une piste de renvoi (15) pour le renvoi des rouleaux (9) aux fins de les guider en une rangée sans fin; des moyens de guidage (19) qui comportent des éléments de guidage (19) à symétrie de rotation autour de l'axe des rouleaux, ces éléments de guidage étant partiellement insérés dans des dépressions (18) des surfaces en bout (10) des rouleaux (9); des rainures de guidage (7, 8) qui font partie du corps de base (6), contre les bordures (11, 11a) desquelles les rouleaux (9) sont guidés latéralement par leurs surfaces en bout (10); et des guides (20, 20a, 20b, 20c; 21, 21a, 21b, 21c) qui s'étendent latéralement par rapport aux rainures de guidage (7, 8) le long de la piste de roulement porteuse (14) ainsi que de la piste de renvoi (15) et qui s'étendent aussi le long des parties de renvoi (16, 16a, 16b), les rouleaux (9) étant guidés de manière à ne pas pouvoir s'échapper, cela grâce aux éléments de guidage (19) d'une part et, d'autre part, grâce aux guides (20, 20a, 20b, 20c; 21, 21a, 21b, 21c),
caractérisé
par le fait que les rouleaux (9) sont guidés par contact, par leurs surfaces en bout (10), contre les bordures (11, 11a) des rainures de guidage (7, 8), par le fait que les pièces intérieures de renvoi (17) constituent des composants séparés qui sont disposés côté tête contre le corps de base (6) de manière à s'y raccorder, par le fait qu'il est prévu, dans le plan médian (M), entre piste de roulement porteuse (14) et piste de renvoi (15), une cage partagée qui est constituée par deux parties de cage de guidage (12, 13), et par le fait que les parties de cage de guidage (12, 13) sont disposées l'une contre l'autre, centrées dans le plan médian (M), maintiennent centrées les pièces intérieures de renvoi (17) et forment, conjointement avec celles-ci, les parties de renvoi (16, 16a, 16b).

2. Patin à circulation de rouleaux (1) pour guidage linéaire, comportant : un corps de base (6) possédant une piste de roulement porteuse (14) contre laquelle des rouleaux (9) provenant du corps de base (6) prennent appui pour transmettre la charge sur une surface de roulement (3) d'un rail de roulement (2); des parties de renvoi (16, 16a, 16b) agencées aux deux extrémités du corps de base (6) et formées par des pièces intérieures de renvoi (17) et par des parties de cage et assemblées à une piste de renvoi (15) pour le renvoi des rouleaux (9) aux fins de les guider en une rangée sans fin; des moyens de guidage (19) qui comportent des éléments de guidage (19) à symétrie de rotation autour de l'axe des rouleaux, ces éléments de guidage étant partiellement insérés dans des dépressions (18) des surfaces en bout (10) des rouleaux (9); des rainures de guidage (7, 8) qui font partie du corps de base (6), contre les bordures (11, 11a) desquelles les rouleaux (9) sont guidés latéralement par leurs surfaces en bout (10); et des guides (20, 20a, 20b, 20c; 21, 21a, 21b, 21c) qui s'étendent latéralement par rapport aux rainures de guidage (7, 8) le long de la piste de roulement porteuse (14) ainsi que de la piste de renvoi (15) et qui s'étendent aussi le long des parties de renvoi (16, 16a, 16b), les rouleaux (9) étant guidés de manière à ne pas pouvoir s'échapper, cela grâce aux éléments de guidage (19) d'une part et, d'autre part, grâce aux guides (20, 20a, 20b, 20c; 21, 21a, 21b, 21c),
caractérisé
par le fait que les rouleaux (9) sont guidés par contact, par leurs surfaces en bout (10), contre les bordures (11, 11a) des rainures de guidage (7, 8), par le fait que les pièces intérieures de renvoi (17) constituent des composants séparés qui sont disposés côté tête contre le corps de base (6, 6a) de manière à s'y raccorder, par le fait qu'il est prévu, dans un plan médian (X) s'étendant transversalement aux axes (22) des rouleaux, une cage partagée qui est constituée par deux parties de cage de guidage (12, 13), et par le fait que les parties de cage de guidage (12, 13) s'appliquent l'une contre l'autre dans le plan de partage (X) en étant centrées, maintiennent centrées les pièces intérieures de renvoi (17) et forment, conjointement avec celles-ci, les parties de renvoi (16, 16a, 16b). !

3. Patin à circulation de rouleaux selon revendication 1,
caractérisé
par le fait que les guides (20, 21) sont constitués par des premières pistes de roulement et guidage (20a, 20b, 20c) qui s'étendent sur le corps de base (6), le long des rainures de guidage (7, 8) et des pièces intérieures de renvoi (17), et par des deuxièmes pistes de roulement et guidage (21) des deux parties de cage de guidage (12, 13), qui complètent les premières, la première partie (12) de cage de guidage étant associée à la piste de roulement porteuse (14) et comportant les deux premières portions (16a) des premières et deuxièmes pistes de roulement et guidage (20c, 21c) ainsi que des évidements de centrage (23) pour les pièces intérieures de renvoi (17), afin de former les parties de renvoi (16), et la deuxième partie de cage de guidage (13) étant conjuguée à la piste de renvoi (15) et comportant les deux deuxièmes portions (16b) des premières et deuxièmes pistes de roulement et guidage (20c, 21c) ainsi que des évidements de centrage (23), pour former les parties de renvoi (16).

4. Patin à circulation de rouleaux selon revendication 2,
caractérisé
par le fait que les deux parties de cage de guidage (12, 13) présentent en totalité les pistes de roulement et guidage (20, 21) pour les billes (19), le long de la piste de roulement porteuse (14) et de la piste de renvoi (15), et par le fait que les parties de cage de guidage (12, 13) enferment en bout le corps de base (6, 6a).

5. Patin à circulation de rouleaux selon l'une des revendications 1 à 4,
caractérisé
par le fait que les dépressions (18) sont réalisées en tant que trous coniques et les éléments de guidage en tant que billes (19).

6. Patin à circulation de rouleaux selon l'une des revendications 1 ou 3,
caractérisé
par le fait que les deux parties de cage de guidage (12, 13) présentent des évidements de centrage (23) pour le maintien des pièces intérieures de renvoi (17) par l'intermédiaire de parties de centrage (24) qui y sont rapportées en formant saillie.

7. Patin à circulation de rouleaux selon revendication 3,
caractérisé
par le fait que la partie de cage de guidage (12) associée à la piste de roulement porteuse (14) s'applique contre les surfaces (26) du corps de base (6) situées latéralement par rapport à la rainure de guidage (7) et recouvre partiellement les côtés en bout (25) de celui-ci.

8. Patin à circulation de rouleaux selon revendication 3,
caractérisé
par le fait que la partie de cage de guidage (13) associée à la piste de renvoi (15) est reçue noyée dans une rainure en gradin (27) du corps de base (6), aménagée latéralement par rapport à la rainure de guidage (8), et recouvre partiellement les côtés en bout (25) de celui-ci.

9. Patin à circulation de rouleaux selon l'une des revendications 1 à 4,
caractérisé
par le fait que les deux parties de cage de guidage (12, 13) sont vissées l'une à l'autre dans la région des parties de renvoi (16) dans lesquelles elles recouvrent le corps de base (6).

10. Patin à circulation de rouleaux selon l'une des revendications 1 à 4,
caractérisé
par le fait que les parties de cage de guidage (12, 13) recouvrent les rouleaux (9) dans la région des parties de renvoi (16) et de la piste de renvoi (15).

11. Patin à circulation de rouleaux selon l'une des revendications 2 ou 4,
caractérisé
par le fait que deux corps de base (6, 6a) avec des pistes de roulement porteuses (14) agencées en formant un angle entre elles constituent une unité (figure 6).
